# EUROPEAN PATENT APPLICATION

(11) **EP 2 530 557 A1**
(43) Date of publication of application: **05.12.2012**
(21) Application number: 11736943.9
(22) Date of filing: 24.01.2011
(51) Int. Cl.: G06F 3/023, H03M 11/04, H04M 1/247

(54) **PORTABLE INFORMATION TERMINAL AND KEY ARRANGEMENT ALTERATION METHOD THEREFOR**

(30) Priority: 27.01.2010 JP 2010015512
(71) Applicant: NEC Corporation, Tokyo 108-8001 (JP)
(72) Inventor: HIRAMOTO Tomohiro, Tokyo 108-8001 (JP)
(74) Representative: Vossius & Partner
(86) International application number: PCT/JP2011/051165
(87) International publication number: WO 2011/093230

(57) **Abstract**

Disclosed is a portable information terminal that includes: an operation image display unit that display a key arrangement comprising a plurality of keys that include specific keys; a detection unit that detects the key operation of a user upon the operation image display unit; a prediction unit that predicts the key that will possibly be operated next from among the plurality of keys upon the operation image display unit, on the basis of the detection results of the detection unit; and a display control unit that, when the key predicted by the prediction unit is predicted to be a key in the vicinity of the specific keys from among the plurality of keys upon the operation image display unit, alters the key arrangement upon the operation image display unit in a manner such that the specific keys are distanced from the predicted key.

## Description

### {Technical Field}

The present invention relates to a portable information terminal and a key arrangement alteration method for the potable information terminal and, more particularly, to a portable information terminal and a key arrangement alteration method that therefore dynamically changes a key arrangement according to a key operation.

### {Background Art}

Generally, keys on a portable information terminal are arranged in fixed positions. For example, a "CLEAR" key and a "2" key are disposed adjacent to each other. This may cause a user who intends to touch the "2" key to erroneously touch the "CLEAR" key, causing unexpected action (function end).

There are known, as related arts concerning a key arrangement on the portable information terminal, e.g., PTLs 1 and 2. PTL 1 describes a technique in which the key arrangement of a touch panel is changed whenever a new processing is performed so that the key arrangement of the touch panel for an operator M is changed from the key arrangement of the touch panel for an operator W.

PTL 2 describes a technique in which display aspects of some operation keys among a plurality of operation keys displayed on an operation screen part are changed. Besides, for example, PTL 3 describes a method of accurately identifying a button that a user has touched on a touch panel input device.

### {Citation List}

### {Patent Literature}

{PTL1} JP-A-2002-032176
{PTL2} JP-A-2008-158723
{PTL3} JP-A-2009-217416

### {Summary of Invention}

### {Technical Problem}

PTL 1 describes the change of the key arrangement; however, PTL 1 merely aims to protect a password. That is, PTL 1 does not aim to prevent an input value from being cleared due to erroneous operation of the key.

PTL 2 describes a method of providing operation input environment according to individual users by, e.g., displaying only required operation keys through change of the display states of some operation keys so as to improve operability; however, PTL 2 does not aim to prevent an input value from being cleared due to erroneous operation of the key, as in the case of PTL 1.

An object of the present invention is to provide a portable information terminal and a key arrangement alteration method for the portable information terminal which are capable of preventing adverse effects, such as clearing of an input value and function end, due to an erroneous key operation of a user.

### {Solution to Problem}

According to a first aspect of the present invention, there is provided a portable information terminal including: an operation image display section which displays a key arrangement including a plurality of keys including a CLEAR key and a POWER key; a detection section which detects a user's key operation to the operation image display section; a prediction section which predicts one of the plurality of keys on the operation image display section that will be touched next based on a result of the detection made by the detection section; and a display controller which changes, in a case where the key predicted to be touched next by the prediction section is positioned in the vicinity of a specific key included in the plurality of keys on the operation image display section, the key arrangement on the operation image display section in such a way that the specific key is positioned away from the key predicted to be touched next.

According to a second aspect of the present invention, there is provided a key arrangement alteration method of dynamically changing a key arrangement on a portable information terminal having an operation image display section which displays the key arrangement that includes a plurality of keys including a specific key. The method includes: a step in which a detection section detects a user's key operation to the operation image display section; a step in which a prediction section predicts one of the plurality of keys on the operation image display section that will be touched next based on a result of the detection made by the detection section; a step in which a display controller changes, in a case where the key predicted to be touched next by the prediction section is positioned in the vicinity of the specific key included in the plurality of keys on the operation image display section, the key arrangement on the operation image display section in such a way that the specific key is positioned away from the key predicted to be touched next.

### {Advantageous Effects of Invention}

According to the present invention, adverse effects, such as clearing of an input value and function end, resulting from a user's erroneous key operation to a terminal can be prevented, thereby allowing improvement of operability.

### {Brief Description of Drawings}

FIG. 1 A block diagram illustrating a configuration of a portable information terminal according to a first exemplary embodiment of the present invention.
FIG. 2 FIGS. 2A to 2C are views illustrating an example of a change of a key arrangement of the portable information terminal illustrated in FIG. 1.
FIG. 3 FIGS. 3A to 3C are views illustrating, continued from FIGS. 2A to 2C, an example of the change of the key arrangement of the portable information terminal illustrated in FIG. 1.
FIG. 4 A flowchart schematically illustrating operation of the portable information terminal illustrated in FIG. 1.
FIG. 5 A flowchart schematically illustrating operation of the portable information terminal according to a second exemplary embodiment of the present invention.

### {Description of Embodiments}

A potable information terminal and a key arrangement alteratin method for the portable information terminal according to the present invention will be described in detail below with reference to the accompanying drawings.

### [First Exemplary Embodiment]

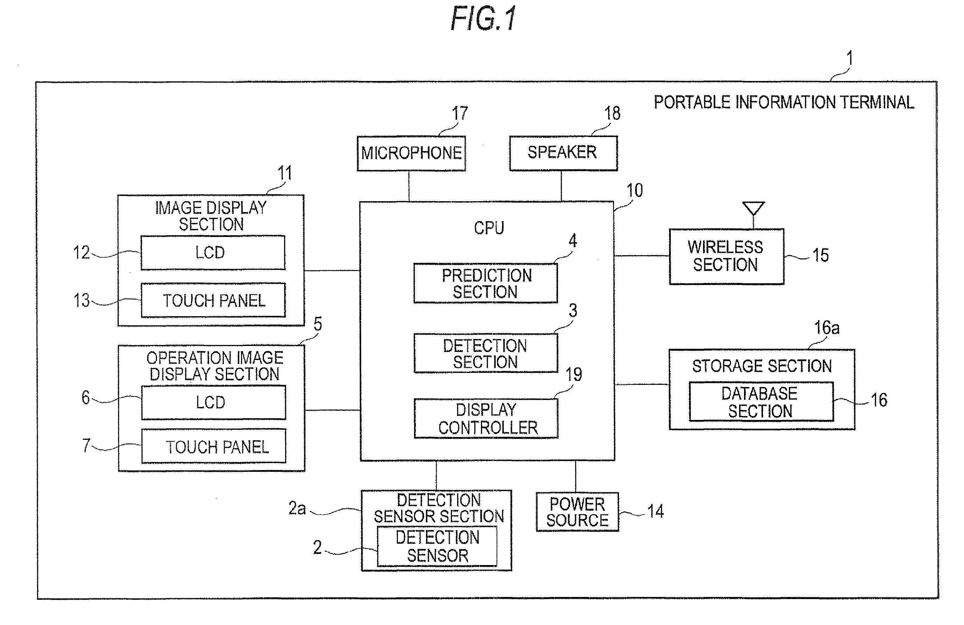

FIG. 1 is a block diagram illustrating a configuration of a portable information terminal according to a first exemplary embodiment of the present invention.

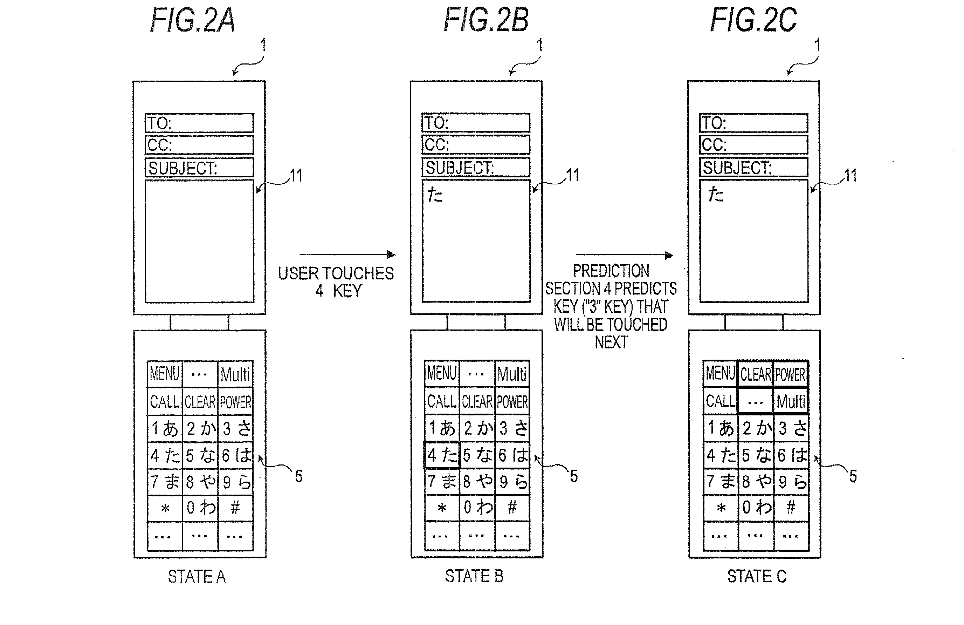

A portable information terminal (wireless portable terminal) 1 according to the present exemplary embodiment illustrated in FIG. 1 is, for example, a wireless portable terminal including a foldable body (casing) as illustrated in FIG. 2. However, the present invention is not limited to this, but may be applied to portable information terminals such as a mobile phone, a PDA (Personal Digital Assistant), and a smartphone each having a portable size so that users can easily carry the portable information terminals and provided with a touch-panel- equipped display unit.

The portable information terminal 1 includes a CPU (Central Processing Unit) 10 which serves as a computer including a controller that controls respective sections provided in the terminal, an image display section 11 which displays an image on a screen, a detection sensor section 2a which include a detection sensor 2 capable of acquiring information concerning a key operation such as position and movement of a user's finger, and an operation image display section 5 that displays an operation image, such as a key arrangement, on a screen. The portable information terminal 1 further includes a generally used power source (battery) 14, a wireless section 15 that performs wireless communication, a storage section 16a which includes a database section 16 that stores various data, a microphone 17 for voice input, and a speaker 18 for voice output. Other components such as a photographing camera are omitted.

The CPU 10 is configured to operate under control of a program. In the present exemplary embodiment, execution of a program (key arrangement changing program) installed in advance in a computer-readable recording medium such as the storage section 16a allows the CPU 10 to function as a detection section 3 that identifies the user's key operation from the information concerning the user's key operation acquired by the detection sensor 2, a prediction section 4 that predicts the user's key operation, and a display controller 19 that performs display control of the image display section 11 and the operation image display section 5.

The image display section 11 includes a display screen of the portable information terminal 1 and includes a LCD (Liquid Crystal Display) 12 and a touch panel 13. The touch panel 13 is configured to specify a location that a user touches with the user's finger on the display screen displayed on the LCD 12 and may be of any type, such as a resistance film type and an electrostatic capacitance type which are known. The operation image display section 5 includes a display screen that displays the operation image such as the key arrangement of the portable information terminal 1 and includes a LCD 6 and a touch panel 7. The touch panel 7 is configured to specify a location that the user touches with the user's finger on the display screen displayed on the LCD 6 and may be of any type, such as a resistance film type and an electrostatic capacitance type which are known.

The operation image display section 5 displays, on the display screen of the LCD 12, a key arrangement that includes a plurality of keys containing a "CLEAR" key and a "POWER" key (which correspond to specific keys included in the present invention). When a key that has been predicted, by the prediction section 4, to be a key that will be touched next by the user is determined to be located in the vicinity of the "CLEAR" key or "POWER" key, the display controller 19 controls the operation image display section 5 to display the key arrangement, replacing the location of the "CLEAR" key or "POWER" key with another key in such a way that the "CLEAR" key or "POWER" key is positioned away from the key predicted to be touched next. That is, the display controller 19 changes the key arrangement on the operation image display section 5 in such a way that the "CLEAR" key or "POWER" key included in the plurality of keys is positioned away from the key predicted to be touched next so as to prevent the user from erroneously touch the "CLEAR" key or "POWER" key when user touches the key predicted to be touched next among the plurality of keys displayed by the operation image display section 5. In a case where the location of the "CLEAR" key or "POWER" key is changed, it is preferable to change the location of the "CLEAR" key or "POWER" key in such a way that the "CLEAR" key or "POWER" key is not adjacent to the key predicted to be touched next. Upon the change of the key arrangement on the operation image display section 5, any key may be replaced with the "CLEAR" key or "POWER" key. With the above configuration, a possibility that the "CLEAR" key or "POWER" key is erroneously touched decreases, thereby preventing situations such as clearing of an input value or function end from occurring.

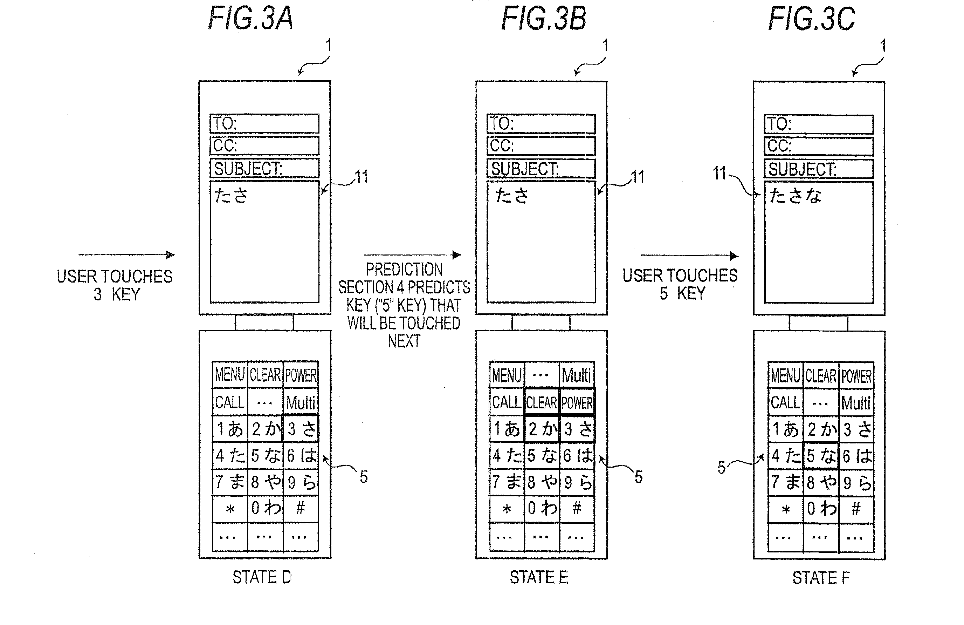

Operation of the present exemplary embodiment will next be described in detail with reference to FIGS. 2 and 3.

FIGS. 2 and 3 are views each illustrating an example of the change of the key arrangement of the portable information terminal according to the present exemplary embodiment. FIGS. 2 and 3 illustrate an example in which the key arrangement is changed upon creation of a mail document. More specifically, FIGS. 2 and 3 illustrate display screens upon creation of a mail document, in which the upper sides each show a mail document creation screen on the image display section 11 of FIG. 1, and the lower sides each show a key arrangement on the operation image display section 5 of FIG. 1.

A state A of FIG. 2A shows an initial state. In the initial state, the display controller 19 makes the operation image display section 5 included in the portable information terminal 1 display an early state of key arrangement (i.e., an initial key arrangement). The key arrangement in the state A of FIG. 2A may be similar to a generally known key arrangement.

Assume that the user has touched, e.g., a " 4 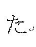 " key of the operation image display section 5 in the state A of FIG. 2A. This state is shown in a state B of FIG. 2B. In the state B, the detection sensor 2 detects the key which is touched by the user and transmits detected information concerning the user's key operation to the detection section 3 in the CPU 10. The detection section 3 transmits the user key information acquired from the detection sensor 2 to the prediction section 4. Then the prediction section 4 predicts a key that will be touched next by the user based on the user key information acquired from the detection section 3. For example, the prediction section 4 includes a character input predictive function realized by the CPU 10 executing an existing program such as Wnn or T9 and uses the character input predictive function to predict the key that will be touched next by the user. Here, assume that it has been predicted that a key positioned in the vicinity of a key (e.g., "CLEAR" key or "POWER" key) which executes deletion of input or termination of a running function. For example, assume that it has been predicted that ""2 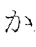 " key or "3 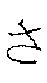 " key which is adjacent to the "CLEAR" key or "POWER" key will be touched next. This state is shown in a state C of FIG. 2C. In the state C, the display controller 19 displays the key arrangement, replacing the "CLEAR" key or "POWER" key positioned in the vicinity of the key predicted to be touched next by the user with a key positioned away from the key ("2" key or "3" key) predicted to be touched next.

Next, assume that the user has depressed the key ("3 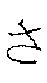 " key) predicted to be touched next in the state C of FIG. 2C. This state is shown in a state D of FIG. 3A. As in the above case, the prediction section 4 predicts a key that will be touched next based on the key information from the detection sensor 2 in this state D. Here, assume that the prediction section 4 has predicted that one (e.g., "5 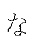 " key) of the keys other than the keys positioned in the vicinity of the key ("CLEAR" key or "POWER" key) that executes deletion of input or termination of a function itself, will be touched next. This state is shown in a state E of FIG. 3B. In this state E, the display controller 19 sets back the location of the "CLEAR" key or "POWER" key to the location in the initial arrangement illustrated in the state A of FIG. 2A. Next, assume that the user has touched the key ("5 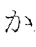 " key) in the state E of FIG. 3B. This state is shown in a state F of FIG. 3C. In this state F, the prediction section 4 predicts a key that will be touched next based on the key information at that time.

If a touch of a key positioned in the vicinity of the "CLEAR" key or "POWER" key is predicted, the display controller 19 displays the key arrangement, replacing the "CLEAR" key or "POWER" key positioned in the vicinity of the key predicted to be touched next with a key positioned away from the key predicted to be touched next, as in the above case. Likewise, in the following input operation, the display controller 19 changes the key arrangement dynamically based on a result of the prediction made by the prediction section 4.

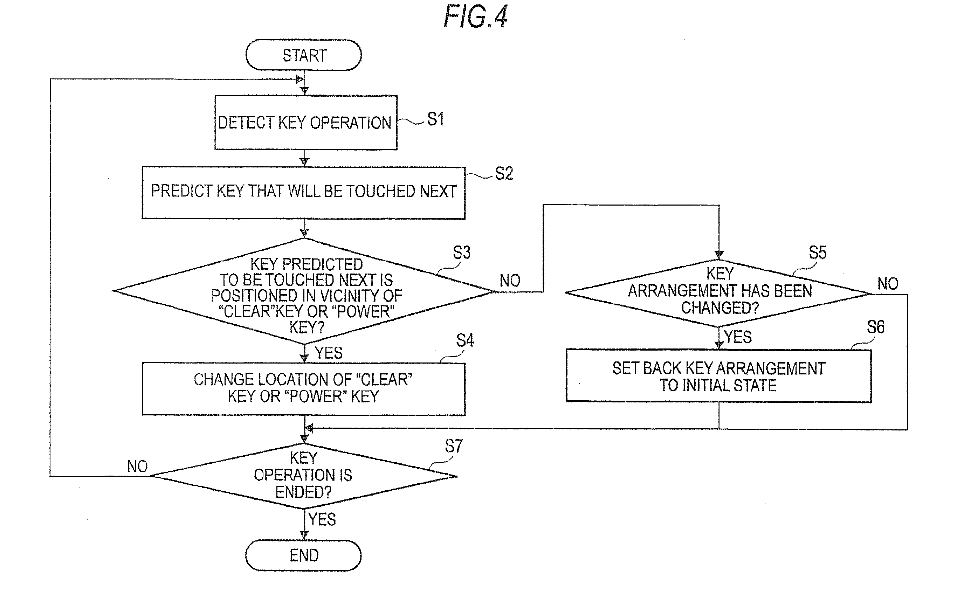

FIG. 4 illustrates a key arrangement alteration method to be applied to the portable information terminal 1.

As illustrated in FIG. 4, in the portable information terminal 1, the detection section 3 detects user's key operation to a plurality of keys on the operation image display section 5 from the information concerning the user's key touch acquired by the detection sensor 2 (step S1). Then the prediction section 4 predicts one of the plurality of keys on the operation image display section 5 that will be touched next based on the prediction result from the detection section 3 (step S2). In a case where the key predicted to be touched next by the prediction section 4 is a key positioned in the vicinity of the "CLEAR" key or "POWER" key included in the plurality of keys on the operation image display section 5 (YES in step S3), the display controller 19 of the portable information terminal 1 changes the location of the "CLEAR" key or "POWER" key on the operation image display section 5 in such a way that the "CLEAR" key or "POWER" key is positioned away from the key predicted to be touched next (step S4).

On the other hand, in a case where the key predicted to be touched next by the prediction section 4 is positioned away from the "CLEAR" key or "POWER" key on the operation image display section 5 (NO in step S3) and if this prediction has been made after the location change of the "CLEAR" key or "POWER" key on the operation image display section 5 in step S4 (YES in step S5), the display controller 19 of the portable information terminal 1 sets back the location of the "CLEAR" key or "POWER" key on the operation image display section 5 to that in the initial arrangement (step S6).

Thereafter, the portable information terminal 1 repeatedly executes the above procedure (steps S1 to S6) while the user performs key operation (NO in step S7). Thus, according to the present exemplary embodiment, adverse effects, such as clearing of an input value and function end, resulting from a user's erroneous key operation to the portable information terminal 1 can be prevented, thereby allowing improvement of operability.

### [Second Exemplary Embodiment]

In the first exemplary embodiment, in the case where the key predicted to be touched next is positioned in the vicinity of the "CLEAR" key or "POWER" key, the key arrangement is changed in such a way that the "CLEAR" key or "POWER" key is positioned away from the key predicted to be touched next. However, the present invention is not limited to the first exemplary embodiment.

For example, in the case where the key predicted to be touched next is a key (e.g., "2 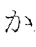 " key or "3 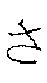 " key) positioned in the vicinity of the "CLEAR" key or "POWER" key, the key arrangement is not changed but the key operation to the "CLEAR" key or "POWER" key is made valid only when the "CLEAR" key or "POWER" key is touched a predetermined number of times (e.g., twice), not once. Also in this case, the same effect can be obtained.

In this configuration, in a case where the prediction section 4 has predicted that one (e.g., "5 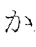 " key) of the keys other than those positioned in the vicinity of the key ("CLEAR" key or "POWER" key) will be touched next after the touch number of times of the "CLEAR" key or "POWER" key has been changed from an initial value (e.g., once) to a predetermined multiple number of times (e.g., twice), the display controller 19 sets back the touch number of times of the "CLEAR" key or "POWER" key to the initial value (e.g., once).

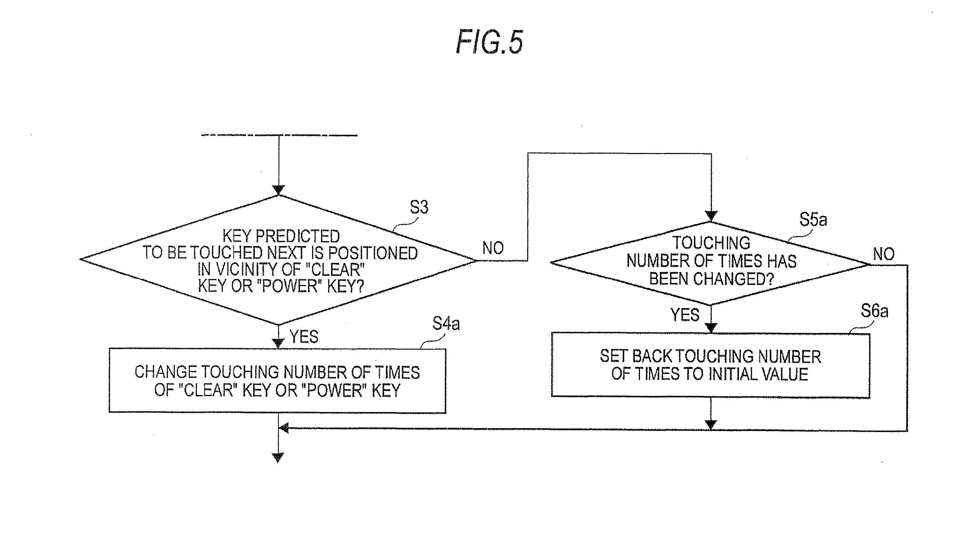

FIG. 5 illustrates a key arrangement alteration method to be applied to the portable information terminal 1 according to the present exemplary embodiment. The configuration and operation of the portable information terminal 1 according to the present exemplary embodiment are the same as the configuration and operation illustrated in FIG. 1 and FIG. 4, respectively, except for replacement of steps S4 to S6 with steps S4a to S6a and, hereinafter, only differences therebetween will be described.

In FIG. 5, in a case where the key predicted to be touched next by the prediction section 4 is a key positioned in the vicinity of the "CLEAR" key or "POWER" key on the operation image section 5 (YES in step S3), the display controller 19 of the portable information terminal 1 changes the touch number of times of the "CLEAR" key or "POWER" key on the operation image display section 5 to a predetermined multiple number of times (e.g., twice) (step S4a).

On the other hand, in a case where the key predicted to be touched next by the prediction section 4 is a key positioned away from the "CLEAR" key or "POWER" key on the operation image display section 5 (NO in step S3), and if this prediction has been made after the change of the touch number of times of the "CLEAR" key or "POWER" key on the operation image display section 5 in step S4a (YES in step S5a), the display controller 19 of the portable information terminal 1 sets back the touch number of times of the "CLEAR" key or "POWER" key to the initial value (e.g., once) (step S6a).

Although the "CLEAR" key or "POWER" key is used as the specific key on the operation image display section 5 in the above exemplary embodiments, the present invention is not necessarily limited to this, but a key other than the "CLEAR" key or "POWER" key may be used so as to prevent adverse effects resulting from user's erroneous operation. In setting the specific key, a method may be employed in which the "CLEAR" key or "POWER" key is set in advance as an initial setting value to be referred to by, e.g., the CPU 10 and thereafter the user changes the initial setting value to any other key as a user setting value.

The whole or part of the exemplary embodiments disclosed above can be described as, but not limited to, the following supplementary notes.

(Supplementary note 1) A portable information terminal comprising: an operation image display section which displays a key arrangement including a plurality of keys containing a specific key; a detection section which detects a user's key operation to the operation image display section; a prediction section which predicts one of the plurality of keys on the operation image display section that will be touched next based on a result of the detection made by the detection section; and a display controller which changes, in a case where the key predicted to be touched next by the prediction section is positioned in the vicinity of the specific key included in the plurality of keys on the operation image display section, the key arrangement on the operation image display section in such a way that the specific key is positioned away from the key predicted to be touched next.

(Supplementary note 2) The portable information terminal according to supplementary note 1, wherein in a case where the prediction section has predicted that a key positioned away from the specific key on the operation image display section will be touched next after the change of the key arrangement on the operation image display section, the display controller sets back the key arrangement on the operation image display section to that in an initial state.

(Supplementary note 3) The portable information terminal according to supplementary note 1, wherein in a case where the prediction section has predicted that a key positioned in the vicinity of the specific key on the operation image display section will be touched next, the display controller changes a touching number of times of the specific key to a predetermined multiple number of times, in place of changing the key arrangement on the operation image display section.

(Supplementary note 4) The portable information terminal according to supplementary note 3, wherein in a case where the prediction section has predicted that a key positioned away from the specific key on the operation image display section will be touched next after the change of the touching number of times of the specific key, the display controller sets back the touching number of times of the specific key to an initial value.

(Supplementary note 5) The portable information terminal according to any one of supplementary notes 1 to 4, wherein the specific key is a "CLEAR" key or "POWER" key.

(Supplementary note 6) A key arrangement alteration method of dynamically changing a key arrangement on a portable information terminal having an operation image display section for displaying the key arrangement that includes a plurality of keys containing a specific key, the method comprising: a step in which a detection section detects a user's key operation to the operation image display section; a step in which a prediction section predicts one of the plurality of keys on the operation image display section that will be touched next based on a result of the detection made by the detection section; and a step in which a display controller changes, in a case where the key predicted to be touched next by the prediction section is positioned in the vicinity of the specific key included in the plurality of keys on the operation image display section, the key arrangement on the operation image display section in such a way that the specific key is positioned away from the key predicted to be touched next.

(Supplementary note 7) The key arrangement alteration method according to Supplementary note 6, wherein in a case where the prediction section has predicted that a key positioned in the vicinity of the specific key on the operation image display section will be touched next, the display controller changes a touching number of times of the specific key to a predetermined multiple number of times, in place of changing the key arrangement on the operation image display section.

(Supplementary note 8) A key arrangement alteration program that dynamically changes a key arrangement on a portable information terminal having an operation image display section for displaying the key arrangement that includes a plurality of keys including a specific key, the program allowing a computer to function as: a detection section which detects a user's key operation to the operation image display section; a prediction section which predicts one of the plurality of keys on the operation image display section that will be touched next based on a result of the detection made by the detection section; and a display controller which changes, in a case where the key predicted to be touched next by the prediction section is positioned in the vicinity of the specific key included in the plurality of keys on the operation image display section, the key arrangement on the operation image display section in such a way that the specific key is positioned away from the key predicted to be touched next.

Although the present invention has been described using the exemplary embodiments, the present invention is not limited to the above exemplary embodiments. Further, various modifications that can be appreciated by those skilled in the art may be made to the configuration or details of the present invention within the scope of the present invention.

This application is based upon and claims the benefit of priority from prior Japanese Patent Application No. 2010-015512, filed January 27, 2010, the entire contents of which are incorporated herein by reference.

### {Industrial Applicability}

The present invention may be applied to a portable information terminal and a key arrangement alteration method for the portable information terminal. In particular, the present invention may be applied to a portable information terminal and a key arrangement alteration method for the information terminal that dynamically change a key arrangement according to a key operation.

### {Reference Signs List}

1: Portable information terminal (wireless portable terminal)
2: Detection sensor
2a: Detection sensor section
3: Detection section
4: Prediction section
5: Operation image display section
6, 12: LCD
7, 13: Touch panel
10: CPU
11: Image display section
14: Power source
15: Wireless section
16: Database section
16a: Storage section
17: Microphone
18: Speaker
19: Display controller

## Claims

1. A portable information terminal comprising:
an operation image display section which displays a key arrangement including a plurality of keys including a specific key;
a detection section which detects a user's key operation to the operation image display section;
a prediction section which predicts one of the plurality of keys on the operation image display section that will be touched next based on a result of the detection made by the detection section;
a display controller which changes, in a case where the key predicted to be touched next by the prediction section is positioned in the vicinity of the specific key included in the plurality of keys on the operation image display section, the key arrangement on the operation image display section in such a way that the specific key is positioned away from the key predicted to be touched next.

2. The portable information terminal according to claim 1, wherein
in a case where the prediction section has predicted that a key positioned away from the specific key on the operation image display section will be touched next after the change of the key arrangement on the operation image display section, the display controller sets back the key arrangement on the operation image display section to that in an initial state.

3. The portable information terminal according to claim 1, wherein
in a case where the prediction section has predicted that a key positioned in the vicinity of the specific key on the operation image display section will be touched next, the display controller changes a touching number of times of the specific key to a predetermined multiple number of times, in place of changing the key arrangement on the operation image display section.

4. The portable information terminal according to claim 3, wherein
in a case where the prediction section has predicted that a key positioned away from the specific key on the operation image display section will be touched next after the change of the touching number of times of the specific key, the display controller sets back the touching number of times of the specific key to an initial value.

5. The portable information terminal according to any one of claims 1 to 4, wherein
the specific key is a "CLEAR" key or "POWER" key.

6. A key arrangement alteration method of dynamically changing a key arrangement on a portable information terminal having an operation image display section for displaying the key arrangement that includes a plurality of keys containing a specific key, the method comprising:
a step in which a detection section detects a user's key operation to the operation image display section;
a step in which a prediction section predicts one of the plurality of keys on the operation image display section that will be touched next based on a result of the detection made by the detection section;
a step in which a display controller changes, in a case where the key predicted to be touched next by the prediction section is positioned in the vicinity of the specific key included in the plurality of keys on the operation image display section, the key arrangement on the operation image display section in such a way that the specific key is positioned away from the key predicted to be touched next.

7. The key arrangement alteration method according to claim 6, wherein
in a case where the prediction section has predicted that a key positioned in the vicinity of the specific key on the operation image display section will be touched next, the display controller changes a touching number of times of the specific key to a predetermined multiple number of times, in place of changing the key arrangement on the operation image display section.

8. A key arrangement alteration program that dynamically changes a key arrangement on a portable information terminal having an operation image display section for displaying the key arrangement that includes a plurality of keys containing a specific key, the program allowing a computer to function as:
a detection section which detects a user's key operation to the operation image display section;
a prediction section which predicts one of the plurality of keys on the operation image display section that will be touched next based on a result of the detection made by the detection section;
a display controller which changes, in a case where the key predicted to be touched next by the prediction section is positioned in the vicinity of the specific key included in the plurality of keys on the operation image display section, the key arrangement on the operation image display section in such a way that the specific key is positioned away from the key predicted to be touched next.
